# EUROPÄISCHE PATENTSCHRIFT

(11) **EP 3 295 072 B1**
(45) Veröffentlichungstag und Bekanntmachung des Hinweises auf die Patenterteilung: **31.07.2019**
(21) Anmeldenummer: 16726024.9
(22) Anmeldetag: 12.05.2016
(51) Int. Cl.: F16P 3/02

(54) **SCHUTZGEHÄUSE FÜR EINE PRÜF-, MESS-, ODER FERTIGUNGSEINRICHTUNG**
PROTECTIVE HOUSING FOR A TESTING, MEASURING OR PRODUCTION DEVICE
BOÎTIER DE PROTECTION DESTINÉ À UN DISPOSITIF DE CONTRÔLE, DE MESURE OU DE FABRICATION

(30) Priorität: 13.05.2015 DE 102015107612
(43) Veröffentlichungstag der Anmeldung: 21.03.2018
(73) Patentinhaber: Schenck RoTec GmbH, 64293 Darmstadt (DE)
(72) Erfinder: MUTH, Christian, 64405 Fischbachtal (DE)
(74) Vertreter: Haarpatent Patentanwälte Krämer Meyer
(86) Internationale Anmeldenummer: PCT/EP2016/060623
(87) Internationale Veröffentlichungsnummer: WO 2016/180909

(56) Entgegenhaltungen:
- DE-A1- 3 411 394
- DE-A1- 19 501 230
- DE-A1-102006 045 733
- DE-A1-102012 200 642
- DE-A1-102013 203 665
- Super-Seal: "Super-Seal Mfg. Machine Guard Door", , 16 July 2013 (2013-07-16), pages 1-1, XP054978689, Retrieved from the Internet: URL:https://www.youtube.com/watch?v=mPam9t 8tmnY [retrieved on 2018-09-14]

## Beschreibung

Die Erfindung betrifft ein Schutzgehäuse für eine Prüf-, Mess- oder Fertigungseinrichtung mit einem Schutzelement, das von Führungseinrichtungen gehalten und geführt zwischen einer eine Gehäuseöffnung verschließenden Schließstellung und einer die Gehäuseöffnung öffnenden Offenstellung hin und her bewegbar ist, wobei die Führungseinrichtungen an einander gegenüberliegenden Seitenwänden der Gehäuseöffnung angeordnet sind.

Ein Schutzgehäuse der im Oberbegriff der Patentansprüche 1 und 9 angegebenen Art ist aus DE 34 11 394 A1 bekannt. Das Schutzgehäuse weist zur Zuführung von Werkstücken eine frontale Öffnung auf, die in eine Öffnung des Gehäusedaches übergeht, wobei beide Öffnungen durch eine gemeinsame, krümmbare Jalousie verschließbar sind, deren Jalousiestäbe auf einem Abschnitt des Gehäusedaches ablegbar sind. Dies habe den Vorzug, dass eine geringe Kraft zum Öffnen der Jalousie erforderlich sei. Eine Antriebsvorrichtung zum Bewegen der Jalousie ist nicht vorhanden.

Aus DE 198 60 765 A1 ist ein Schutzgehäuse für eine Verpackungsmaschine bekannt, das eine flexible, insbesondere aus Plexiglas bestehende rechteckige Schutzscheibe umfasst, die die Vorderfront bzw. Bedienerseite während des Betriebs der Verpackungsmaschine vor manuellen Eingriffen schützt. Die Schutzscheibe ist beispielsweise für Wartungs- oder Einstellarbeiten manuell oder durch einen Antrieb aus der geschlossenen Betriebsstellung in eine Offenstellung verstellbar. Hierzu sind die seitlichen Bereiche der Schutzscheibe über Rollen oder ähnliche Mittel in Führungsnuten in den Seitenwänden des Schutzgehäuses derart geführt, dass sich die Schutzscheibe beim Öffnen in einen unteren Bereich des Gehäuses der Verpackungsmaschine nach Art einer Schublade einschieben lässt. Die Führungsnuten haben einen gebogenen und einen gradlinigen Abschnitt, so dass die einstückige Schutzscheibe beim Bewegen von der Offenstellung in die Schließstellung gebogen werden muss, was die Verschiebekräfte erhöht.

In einer aus DE 198 60 765 A1 bekannten zweiten Ausführungsvariante sind zum Verschließen der Gehäuseöffnung zwei Schutzscheiben vorgesehen, die in getrennten Führungen in den Seitenwänden geführt sind, wobei die beiden Führungen in weiten Bereichen parallel zueinander verlaufen. Die eine Führung ist hierbei gegenüber der anderen Führung verlängert ausgebildet, wodurch die Schutzscheiben in der Schließstellung aneinander angrenzende Öffnungsbereiche abdecken. In Offenstellung können die Schutzscheiben raumsparend übereinander geschoben werden. Außerdem kann eine der Schutzscheiben mit einer dem bogenförmigen Abschnitt angepassten Krümmung versehen sein.

Bei einer aus US 7 441 456 B1 bekannten Auswuchtmaschine zum Auswuchten von Gelenkwellen sind zum vollständigen Verschließen der Vorderseite der Maschine zwei Türbaugruppen an beiden Seiten der Maschine angeordnet, die jeweils aus drei übereinander liegenden Türelementen bestehen. Die Türelemente sind mittels Rollen an oberen und unteren Türschienen gelagert und können mittels Betätigungseinrichtungen relativ zum Maschinenrahmen bewegt werden. Beim Schließen werden zunächst die ersten Türelemente in Schließrichtung bewegt, die dann die zweiten Türelemente mitziehen, bis diese in der Schließstellung an den dritten Türelementen anstoßen. Alle Türelemente bilden dann eine geschlossene Reihe von noch etwas überlappenden Türelementen, die Personen vor der Maschine vor Gefahren durch Bewegungen der Maschine und Schweißvorgänge zum Befestigen von Ausgleichsgewichten schützen. Die bekannte Türanordnung bedingt eine relativ hohe und schwere Bauweise des Schutzgehäuses der Maschine und die Öffnungs- und Schließzeiten sind wegen des großen Verfahrwegs relativ lang.

Ferner offenbart DE 10 2013 203 665 A1 ein Schutzgehäuse, insbesondere für eine Fertigungseinrichtung, mit wenigstens einem zwischen einer geschlossenen Stellung und einer geöffneten Stellung beweglichem Schutzelement. Das Schutzelement ist mit einem Führungsmechanismus gekoppelt, der zum Verstellen des Schutzelements zwischen den beiden Stellungen ausgebildet ist.

DE 10 2006 045 733 A1 offenbart eine Werkzeugmaschine mit einem Arbeitsraum, in dem eine Vorrichtung zum Aufnehmen von zu bearbeitenden Werkstücken vorgesehen ist. Der Arbeitsraum ist nach unten zumindest teilweise durch eine in der Querrichtung längenveränderliche Abdeckung abdeckt die mit einem Ständer verbunden ist und eine in Querrichtung verschiebbare Gliederschürze umfasst, die mit dem Ständer verbunden und in Schienen geführt ist.

Aus DE 10 2012 200 642 A1 ist eine Abdeckvorrichtung für Öffnungen, insbesondere für Maschinenöffnungen bekannt. Die Abdeckvorrichtung umfasst mindestens einen Grundkörper, eine an dem mindestens einen Grundkörper angeordnete Wickeleinheit mit einem um eine Drehachse drehbaren Wickelkörper, einem Federelement zum Erzeugen einer auf den Wickelkörper wirkenden Vorspannkraft und einem Gegenlager für das Federelement sowie ein Abdeckelement zum Abdecken der Öffnung. Das Abdeckelement ist zum Öffnen der Öffnung auf den Wickelkörper aufwickelbar und zum Abdecken der Öffnung von dem Wickelkörper abwickelbar. Das Gegenlager ist relativ zu der Drehachse verlagerbar, wobei zur Verlagerung des Gegenlagers eine Auf- und Abwickelbewegung des Abdeckelements mittels einer Kopplungsmechanik mit dem Gegenlager gekoppelt ist.

Super-Seal: "Super-Seal Mfg. Machine Guard Door", 16.Juli 2013 /2013-07-16), Seiten 1-1, XP054978689, gefunden im Internet: URL: https://www.youtube.com/ watch?v=mPam9t8tmnY, zeigt ein Schutzgehäuse einer Dreh-/ Schneidmaschine mit einem automatisch verschiebbaren Schutzelement in der Form eines vertikal bewegbaren Rolltors.

Für Prüf-, Mess- und Fertigungseinrichtungen, in denen Teile mit hoher Geschwindigkeit rotieren und bei denen infolge von Prüf- oder Bearbeitungsvorgängen die Gefahr besteht, dass Teile aus der Maschine herausgeschleudert werden und Schäden und Verletzungen verursachen können, müssen das Schutzgehäuse und das bewegliche Schutzelement sehr robust und durchschlagsicher ausgebildet sein. Dies hat zur Folge, dass geeignete Schutzelemente verhältnismäßig schwer werden, wenn eine große Gehäuseöffnung für das Beladen oder Bedienen der in dem Schutzgehäuse befindlichen Einrichtung erforderlich ist. Gleichzeitig besteht vielfach das Bedürfnis, das Öffnen und Schließen der Gehäuseöffnung mit Hilfe des Schutzelements möglichst schnell ausführen zu können, weil während dieser Vorgänge die Einrichtungen im Schutzgehäuse weder betrieben noch bedient oder beladen werden können. Solche Anforderungen bestehen beispielsweise bei Gelenkwellen-Auswuchtmaschinen, auf denen Gelenkwellen in periodischer Folge ausgewuchtet werden. Das Schutzgehäuse dieser Maschinen benötigt eine große Öffnung zum Be- und Entladen der mitunter recht langen Gelenkwellen, wobei die Zeit zum Öffnen und Schließen der Gehäuseöffnung die Taktzeit für die einander folgenden Auswuchtperioden nachteilig beeinflusst. Hohe Öffnungs- und Schließgeschwindigkeiten des Schutzelements führen jedoch zu hohen Beschleunigungs- und Verzögerungskräften und dadurch bedingten Belastungen der Führungseinrichtung und des Antriebsmechanismus für das bewegliche Schutzelement.

Der Erfindung liegt die Aufgabe zugrunde, ein Schutzgehäuse der eingangs angegebenen Art zu schaffen, bei dem eine verhältnismäßig breite Gehäuseöffnung mit einem durchschlagssicheren Schutzelement verschließbar ist und der Zeitbedarf für das Öffnen und Schließen der Gehäuseöffnung klein ist. Desweiteren sollen die Einrichtungen zum Führen des Schutzelements und die Antriebsvorrichtung zum Bewegen des Schutzelements kostengünstig herstellbar sein, einen geringen Wartungsaufwand erfordern und sich durch geringe Reibungsverluste und hohe Lebensdauer auszeichnen.

Die genannte Aufgabe wird durch ein Schutzgehäuse mit den in den Ansprüchen 1 und 9 angegebenen Merkmalen gelöst. Vorteilhafte Ausgestaltungen des Schutzgehäuses sind in den Unteransprüchen angegeben.

Das Schutzgehäuse nach der Erfindung umfasst ein Schutzelement, das von Führungseinrichtungen gehalten und geführt mittels einer Antriebsvorrichtung zwischen einer eine Gehäuseöffnung verschließenden Schließstellung und einer die Gehäuseöffnung öffnenden Offenstellung hin und her bewegbar ist, wobei die Führungseinrichtungen an einander gegenüberliegenden, an die Gehäuseöffnung angrenzenden Seitenwänden angeordnet sind, an einer Frontseite des Schutzgehäuses nach außen gewölbte, bogenförmige Abschnitte haben und an einer Oberseite des Schutzgehäuses geradlinig nach hinten verlaufend ausgebildet sind. Diese Gestaltung ermöglicht einen großen nutzbaren Innenraum mit gut zugänglicher Öffnung und eine niedrige Bauhöhe des Schutzgehäuses. Das Schutzelement umfasst vorzugsweise wenigstens zwei biegesteife, rechteckige Platten, die gerade Längsseiten haben. Die Platten können eine den bogenförmigen Abschnitten der Führungseinrichtung angeglichene Krümmung haben und die jeweils an einer Längsseite beweglich, insbesondere durch ein Scharnier miteinander verbunden sein. Infolge der gekrümmten Ausbildung seiner Platten hat das Schutzelement eine große Biegesteifigkeit und kann daher auch in schwerer, durchschlagssicherer Ausführung eine Gehäuseöffnung von großer Breite überbrücken. Durch die Krümmung der Platten benötigt das Schutzelement keinen Bewegungsraum auf der Innenseite der Führung. Die Verbindung der benachbarten Längsseiten der Platten durch ein Scharnier sorgt sowohl in der Offen- als auch in der Schließstellung des Schutzelements für erhöhte Biegesteifigkeit und in der Schließstellung für Durchschlagssicherheit an den miteinander verbundenen Längsseiten der Platten.

Jede der Führungseinrichtungen weist nach der Erfindung eine an der Seitenwand befestigte Führungsschiene und mehrere an dieser geführte Führungselemente auf, die an dem Schutzelement drehbar gelagert sind. Vorzugsweise kann ein Führungselement an dem Scharnier und jeweils ein weiteres Führungselement auf beiden Seiten des Scharniers und in einem Abstand von diesem angeordnet sein. Die Führung des Schutzelements mittels an den Seitenwänden der Gehäuseöffnung angebrachten Führungsschienen und diese umgreifenden Führungselementen ist kostengünstig herstellbar und gewährleistet eine dauerhafte, robuste und reibungsarme Führung, die schnelle Bewegungen des Schutzelements zulässt. Bei Verschleiß lassen sich die Führungseinrichtungen kostengünstig ersetzen.

Die Antriebsvorrichtung für das Schutzelement weist nach der Erfindung zwei synchron antreibbare Zugmittelgetriebe auf, die jeweils auf der Innenseite des Schutzgehäuses nahe einer der Führungseinrichtungen angeordnet sind und ein parallel zum geradlinigen Abschnitt der jeweiligen Führungseinrichtung verlaufendes Zugmittel umfassen, das mit einem Führungselement treibend verbunden ist.

Das Bewegen des Schutzelements mit Hilfe der synchron antreibbaren Zugmittelgetriebe, die nahe der Führungseinrichtungen an beiden Seiten der Gehäuseöffnung angeordnet sind, gewährleistet eine klemmfreie Bewegung des Schutzelements und die Aufnahme hoher Beschleunigungs- und Verzögerungskräfte, so dass ein schnelles Öffnen und Schließen des Schutzelements möglich ist.

Nach einem weiteren Vorschlag der Erfindung kann das Schutzgehäuse an seiner Oberseite mittels einer feststehenden Dachplatte verschlossen sein, die sich von einem hinteren Rand der Gehäuseöffnung bis zu einer Rückwand des Schutzgehäuses erstreckt. Die Anordnung der feststehenden Dachplatte trägt zur Verkleinerung der Gehäuseöffnung damit auch zur Verkleinerung des bewegbaren Schutzelements zum Verschließen derselben bei. Die bewegbare Masse des Schutzelements und der Weg des Schutzelements zum Schließen und Öffnen sind dementsprechend ebenfalls kleiner und gestatten daher kurze Schließ- und Öffnungszeiten.

Vorzugsweise ist die Dachplatte zwischen den beiden Zugmittelgetrieben angeordnet und das Schutzelement befindet sich in der Offenstellung über der Dachplatte. Diese Anordnung des Schutzelements in der Offenstellung trägt zu einer niedrigen Bauhöhe des Schutzgehäuses bei.

Auch an der Frontseite des Schutzgehäuses kann zur Verringerung der Breite der Gehäuseöffnung eine feststehende Schutzwand angeordnet sein, die sich vom unteren Rand der Gehäuseöffnung bis in Bodennähe erstreckt. Die Schutzwand kann vorteilhaft mit einem langgestreckten Schlitz zum Hindurchführen von Bedienungsorganen versehen sein.

Der synchrone Antrieb der beiden Zugmittelgetriebe wird nach einer ersten Ausgestaltung der Erfindung dadurch erreicht, dass die beiden Zugmittelgetriebe mit einer gemeinsamen Antriebswelle gekuppelt sind, die parallel zu einer Längsseite des Schutzelements angeordnet ist. Die Antriebswelle kann mit einem insbesondere elektrisch angetriebenen Getriebemotor gekuppelt sein, der vorzugsweise auf einer der Führungseinrichtung abgekehrten Seite einer Seitenwand innerhalb des Schutzgehäuses angeordnet ist. In einer zweiten Ausgestaltung der Erfindung ist jedes der beiden Zugmittelgetriebe durch einen separaten Elektromotor antreibbar, wobei die Elektromotore gemeinsam an eine elektrische Steuereinrichtung angeschlossen sind, die die Drehbewegungen der Elektromotore synchronisiert. Diese zweite Ausgestaltung bietet größere Freiheit in der räumlichen Gestaltung des Schutzgehäuses und der Anordnung der Elektromotore.

Eine vorteilhafte Ausgestaltung der Führungselemente weist nach der Erfindung in einem Abstand voneinander angeordnete Rollen auf, die um parallele Achsen drehbar sind und zwischen denen die Führungsschiene angeordnet ist. Vorzugsweise sind die Führungselemente auf beiden Seiten der Führungsschiene jeweils mit einem Rollenpaar versehen. Die Führungsschiene ist nach der Erfindung auf ihren entgegengesetzten Seiten mit Längsrillen versehen, in die die Rollen mit ihrer Umfangsfläche eingreifen. Die erfindungsgemäße Ausgestaltung der Führungselemente eignete sich zur Abstützung und Führung eines schweren Schutzelements und zeichnet sich durch geringe Reibung und hohe Lebensdauer aus.

Nach einem weiteren Vorschlag der Erfindung kann an dem hintersten Führungselement ein flexibles Schutzband befestigt sein, das bei geschlossenem Schutzelement den geradlinigen Abschnitt der Führungseinrichtung bedeckt und die Gefahr einer Verletzung beim Öffnen des Schutzelements beseitigt. Das Schutzband kann um ein hinteres Ende der Seitenwand herum geführt und mit seinem anderen Ende an einem Gleitschuh befestigt sein, der an einer auf der der Führungseinrichtung abgekehrten Seite der Seitenwand angeordneten Gleitschiene geführt ist und treibend mit dem Zugmittel des an der Seitenwand angeordneten Zugmittelgetriebes verbunden ist.

Um das Schutzband unabhängig von äußeren Einflüssen immer gespannt zu halten, kann es außerdem über vorgespannte, federnde Mittel mit dem Gleitschuh oder dem hintersten Führungselement verbunden sein. Alternativ kann auch das Schutzband eine zum gespannten Halten geeignete Elastizität aufweisen.

Die Erfindung wird nachfolgend anhand eines Ausführungsbeispiels der Erfindung näher erläutert, das in der Zeichnung dargestellt ist. Es zeigen
- Figur 1: ein Schutzgehäuse zur Aufnahme einer Gelenkwellen-Auswuchtmaschine mit geschlossenem Schutzelement,
- Figur 2: das Schutzgehäuse gemäß Figur 1 mit geöffnetem Schutzelement,
- Figur 3: einen Ausschnitt des Rahmens des Schutzgehäuses gemäß Figur 1 mit daran angeordneter Führungseinrichtung und Antriebsvorrichtung zum Halten und Bewegen des Schutzelements,
- Figur 4: eine Rückansicht des Schutzgehäuses gemäß Figur 1, teilweise entkleidet,
- Figur 5: einen Ausschnitt der Rückseite des Schutzgehäuses gemäß Figur 1, teilweise entkleidet.

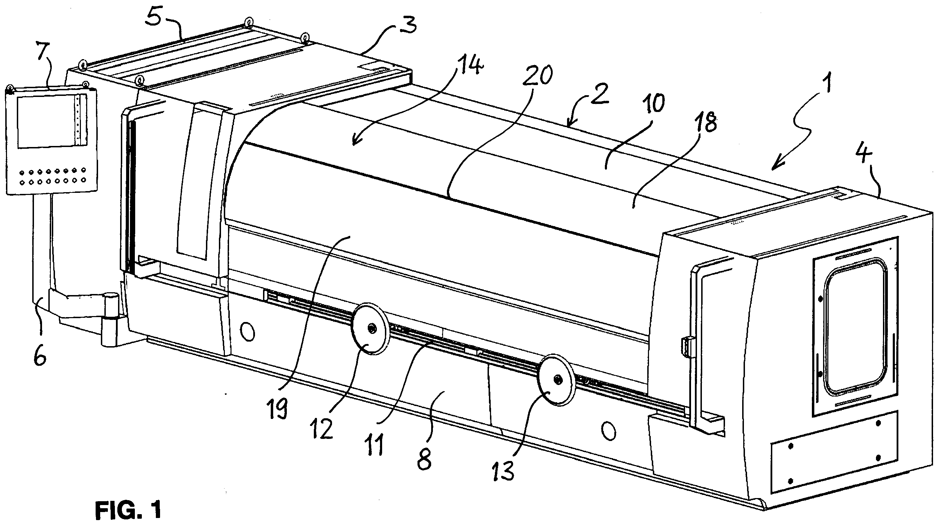

Das in Figur 1 dargestellte Schutzgehäuse 1 ist zum Einhausen einer Auswuchtmaschine zum Auswuchten von Gelenkwellen bestimmt. Wegen der mitunter recht großen Länge von Gelenkwellen haben Auswuchtmaschinen für Gelenkwellen meist eine recht große Baulänge, die 5 m und mehr betragen kann. Eine entsprechend große Länge wird daher auch für das Schutzgehäuse gefordert. Während des Auswuchtprozesses werden Gelenkwellen zum Messen der vorhandenen Unwucht mit einer relativ hohen Auswuchtdrehzahl gedreht. Da die hohen Auswuchtdrehzahlen ein Gefahrenpotential darstellen, muss die Auswuchtmaschine während der Rotation der Gelenkwelle mit einem Schutzgehäuse umgeben sein, das die Anforderungen einer bestimmten Schutzklasse erfüllt. Erforderlich sind hierfür beispielsweise robust gebaute Wände und Türen aus Stahl, die gegen Durchschlag eines wegfliegenden Teils, z.B. eines Auswuchtgewichts, sicher sind. Für das Beladen der Auswuchtmaschine mit den auszuwuchtenden Gelenkwellen benötigt das Schutzgehäuse außerdem eine große Gehäuseöffnung, durch die die Gelenkwellen von Hand oder mittels Greifvorrichtungen in die Auswuchtmaschine einlegbar sind. Zum Verschließen der Gehäuseöffnung ist daher ebenfalls ein durchschlagssicheres Schutzelement entsprechender Größe erforderlich.

Das Schutzgehäuse 1 besteht aus einem langgestreckten Mittelabschnitt 2, an den sich auf beiden Seiten jeweils ein Randabschnitt 3, 4 anschließt. Die Randabschnitte 3, 4 sind etwas höher und breiter als der Mittelabschnitt 2 und jeweils durch eine schmale Stufe von diesem abgesetzt. Innerhalb des Schutzgehäuses 1 sind die Randabschnitte 3, 4 mit dem Mittelabschnitt 2 durch große Öffnungen verbunden und bilden zusammen mit dem Mittelabschnitt 2 einen einheitlichen, die einzelnen Aggregate der Auswuchtmaschine aufnehmenden Maschinenraum. Auf ihren Außenseiten sind die Randabschnitte 3, 4 verschlossen.

An den Randabschnitt 3 schließt sich auf der dem Mittelabschnitt 2 abgekehrten Seite ein Schrankabschnitt 5 an, der als Schaltschrank die elektrischen Aggregate enthält, die zur Energieversorgung und Steuerung der Auswuchtmaschine erforderlich sind. An dem Schrankabschnitt 5 ist ein rohrförmiger Schwenkarm 6 angeordnet, der einen Bildschirm 7 zur Anzeige der den jeweiligen Auswuchtprozess betreffenden Mess- und Auswertedaten dient.

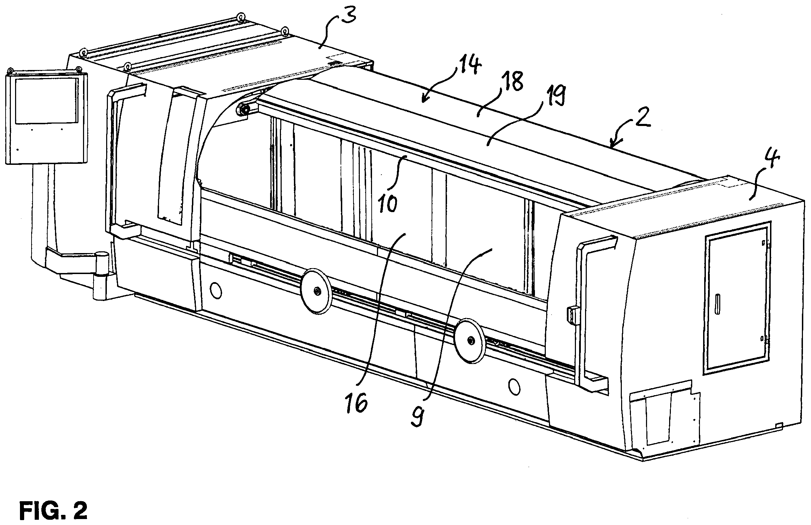

Der Mittelabschnitt 2 weist an der Vorderseite eine feststehende Wand, 8, die vom Boden bis etwa zur halben Höhe des Schutzgehäuses 1 reicht, und eine feststehende, in Figur 2 sichtbare Rückwand 9 auf. An der Oberseite ist der Mittelabschnitt 2 mit einer ebenen, feststehenden Dachplatte 10 verschlossen. Die Wand 8 hat etwa in ihrer Mitte einen horizontalen Schlitz 11, der sich in dem Randabschnitt 4 fortsetzt und durch den Bedienelemente 12, 13 der Auswuchtmaschine nach außen geführt sind. Zwischen dem oberen horizontalen Rand der Wand 8 und der vorderen horizontalen Kante der Dachplatte 10 befindet sich ein bewegliches Schutzelement 14. Das Schutzelement 14 verschließt, wie in Figur 2 zu sehen, eine rechteckige Gehäuseöffnung 16, die sich von dem Randabschnitt 3 bis zu dem Randabschnitt 4 erstreckt und unten an der Wand 8 und oben an der Dachplatte 10 endet. Die Öffnung 16 umfasst somit in der Höhe etwa die obere Hälfte der Vorderseite des Mittelabschnitts 2 und einen Teil seiner Oberseite, so dass die Auswuchtmaschine im Inneren des Schutzgehäuses 1 für das Beladen und Entnehmen von Gelenkwellen durch die Öffnung 16 gut zugänglich ist.

Das Schutzelement 14 besteht aus zwei rechteckigen, biegesteifen Platten 18, 19, die an einer ihrer Längsseiten durch ein Scharnier 20 von der Art eines Klavierbands drehbeweglich miteinander verbunden sind. An seinen querseitigen Enden ist das Schutzelement 14 mittels Führungseinrichtungen bewegbar gehalten und geführt, die an den einander zugekehrten Seitenwänden 21, 22 der Randabschnitte 3, 4 angebracht sind. Die Platten 18, 19 haben eine solche Krümmung und die Führungseinrichtungen sind so ausgebildet, dass das Schutzelement 14 in der in Figur 1 gezeigten Schließstellung eine einheitliche, nach außen gewölbte Krümmung hat. Die Krümmungsradien der beiden Platten 18, 19 sind gleich und in der Schließstellung des Schutzelements 14 fallen die Krümmungsachsen der beiden Platten 18, 19 in einer Achse zusammen.

In der in Figur 2 gezeigten Offenstellung befindet sich das Schutzelement über der Dachplatte 10, wobei die Längsseiten der Platten 18, 19 in einer zur Dachplatte 10 parallelen Ebene liegen. In dieser Anordnung der Platten 18, 19 ist die von der Krümmung abhängige Höhe des Schutzelements 14 relativ klein und trägt dadurch zum Erreichen einer niedrigen Bauhöhe des Schutzgehäuses 1 bei.

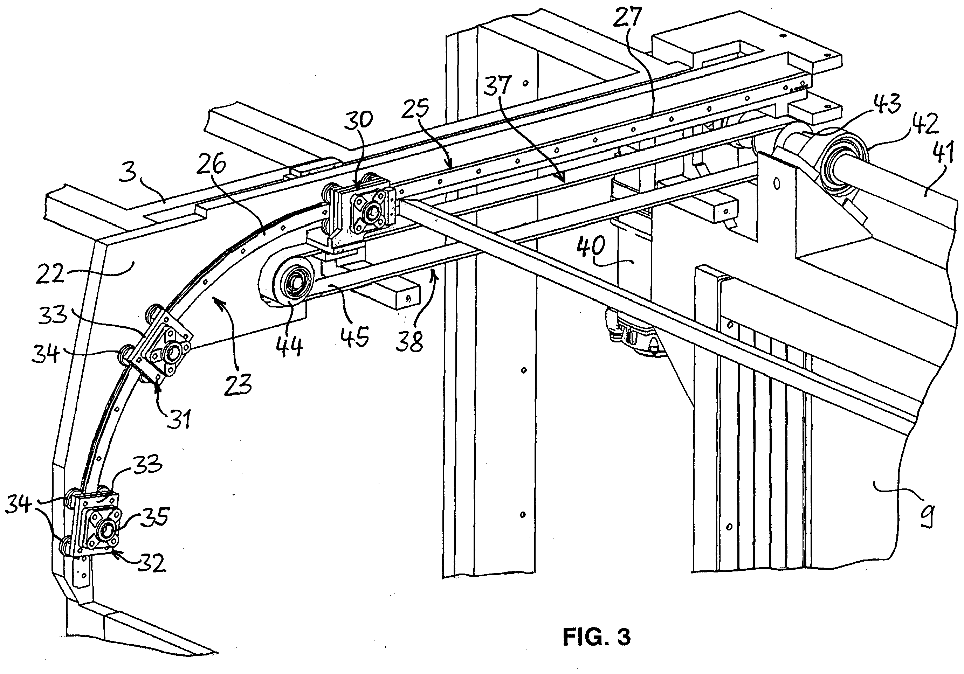

Figur 3 zeigt die eine an einer Seitenwand 22 des Randabschnitts 3 angeordnete Führungseinrichtung 23 zur Führung und Lagerung des einen querseitigen Endes des Schutzelements 14. Eine in gleicher Weise, jedoch spiegelbildlich ausgebildete Führungseinrichtung 24 befindet sich an der gegenüber liegenden Seitenwand des Randabschnitts 4 und führt und lagert das andere querseitige Ende des Schutzelements 14.

Die Führungseinrichtung 23 hat eine an der Seitenwand 22 befestigte Führungsschiene 25, die im vorderen Bereich einen kreisbogenförmigen Schienenabschnitt 26 bildet, an den sich im hinteren Bereich an geradliniger, horizontaler Schienenabschnitt 27 anschließt. Der bogenförmige Schienenabschnitt 26 erstreckt sich im Wesentlichen über die Bogenlänge eines Viertelkreises. Auf ihren entgegengesetzten Seiten ist die Führungsschiene 25 mit Längsrillen versehen.

Auf der Führungsschiene 25 sind drei baugleiche Führungselemente 30, 31, 32 angeordnet. Die Führungselemente 30, 31, 32 haben jeweils einen plattenförmigen, rechteckigen Körper 33, der auf einer Seite vier zapfengelagerte Rollen 34 trägt, von denen zwei Rollen auf der einen und zwei Rollen auf der anderen Seite der Führungsschiene 25 angeordnet sind und die jeweils in die Längsrille der Führungsschiene 25 eingreifen. Die Führungselemente 30, 31, 32 sind auf diese Weise formschlüssig und längsbeweglich an der Führungsschiene 25 gehalten.

Auf der den Rollen 34 abgekehrten Seite des Körpers 33 ist an den Führungselementen 30, 31, 32 jeweils ein Drehlager 35 befestigt, das zur drehbeweglichen Halterung des Schutzelements 14 dient. An dem Drehlager 35 des Führungselements 30 ist das hintere Ende und an dem Drehlager 35 des Führungselements 32 das vordere Ende der Querseite des Schutzelements 14 befestigt. Das Drehlager 35 des Führungselements 31 ist mit der Achse des Scharniers 20 verbunden. Das entgegengesetzte querseitige Ende des Schutzelements 14 ist in analoger Weise an der an dem Randabschnitt 4 angebrachten, spiegelbildlich baugleichen Führungseinrichtung 24 befestigt. Durch die Lagerung an den beiden Führungseinrichtungen 23, 24 kann das Schutzelement 14 leichtgängig zwischen der Offenstellung und der Schließstellung hin und her bewegt werden.

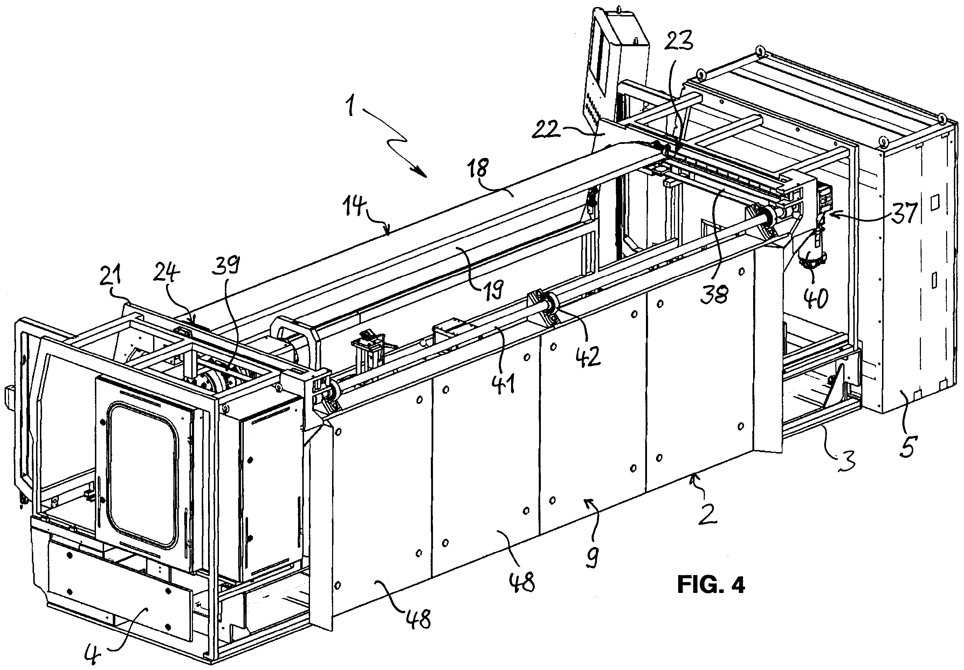

Die durch die Größe und die Erfüllung der Schutzfunktion bedingte Masse des Schutzelements 14 lässt ein Öffnen und Schließen von Hand in der Regel nicht zu. Zur Bewegung des Schutzelements 14 ist daher eine Antriebsvorrichtung 37 vorhanden, die zwei den Führungseinrichtungen 23, 24 zugeordnete Zugmittelgetriebe 38, 39 und einen Antriebsmotor 40 umfasst, der eine beiden Zugmittelgetrieben 38, 39 gemeinsame Antriebswelle 41 antreibt. Wie in Figur 4 gezeigt, ist die Antriebswelle 41 vorteilhaft an der hinteren oberen Ecke des Schutzgehäuses 1 unterhalb der hinteren Enden der Führungseinrichtungen 23, 24 angeordnet und in Stehlagergehäusen 42 gelagert. Jedes Zugmittelgetriebe 38, 39 umfasst ein auf der Antriebswelle 41 angeordnetes Treibrad 43 und eine Umlenkrolle 44, die nahe dem gebogenen Schienenabschnitt 26 der Führungseinrichtungen 23, 24 angeordnet ist. Als Zugmittel 45 dient vorzugsweise ein Zahnriemen. Alternativ kann jedoch auch eine Kette verwendet werden. Das Treibrad 43 und die Umlenkrolle 44 sind so angeordnet, dass die Gurte des Zugmittels 45 parallel zu den geraden Schienenabschnitten 27 der Führungseinrichtungen 23, 24 verlaufen. An dem oberen Gurt des Zugmittels 45 ist jeweils das hintere Führungselement 30 befestigt.

Wird die Antriebswelle 43 bei der Darstellung in Figur 3 durch den Antriebsmotor 40 im Uhrzeigersinn angetrieben, so bewirkt dies eine Verlagerung der mit dem Führungselement 30 verbundenen Stelle des Zugmittels in Richtung des Treibrades 43 und damit eine Bewegung des Führungselements 30 in Richtung des hinteren Endes der Führungsschiene 25. Das dem Führungselement 30 entsprechende Führungselement der Führungseinrichtung 24 führt durch das Zugmittelgetriebe 39 angetrieben eine synchrone Bewegung aus. Dementsprechend wird das Schutzelement 14 von den Führungselementen 31, 32 aus seiner vorderen Schließstellung in die Offenstellung bewegt, wobei die Führungselemente 31, 32 und die entsprechenden Führungselemente der Führungseinrichtung 24 an der Bewegung teilnehmen und das Schutzelement 14 an den Führungsschienen führen. Die Offenstellung ist erreicht, wenn die hinteren Führungselemente sich in ihrer Endstellung nahe der Antriebswelle 41 befinden.

Figur 4 zeigt das Schutzgehäuse 1 von hinten, wobei in dieser Darstellung Teile der Verkleidung der Randabschnitte 3, 4 und die Dachplatte 10 weggelassen sind. Zu sehen ist das den Mittelabschnitt 2 überspannende Schutzelement 14, das sich in der Schließstellung befindet und an den Führungseinrichtungen 23, 24 gehalten ist. Zu sehen ist auch die Antriebswelle 41, die die Zugmittelgetriebe 38, 39 miteinander verbindet und an den Antriebsmotor 40 gekuppelt ist, der sich innerhalb des Randabschnitts 3 befindet. Die Rückwand 9 des Mittelabschnitts 2 ist mit ebenen Platten 48 verschlossen, die Schutzfunktion haben.

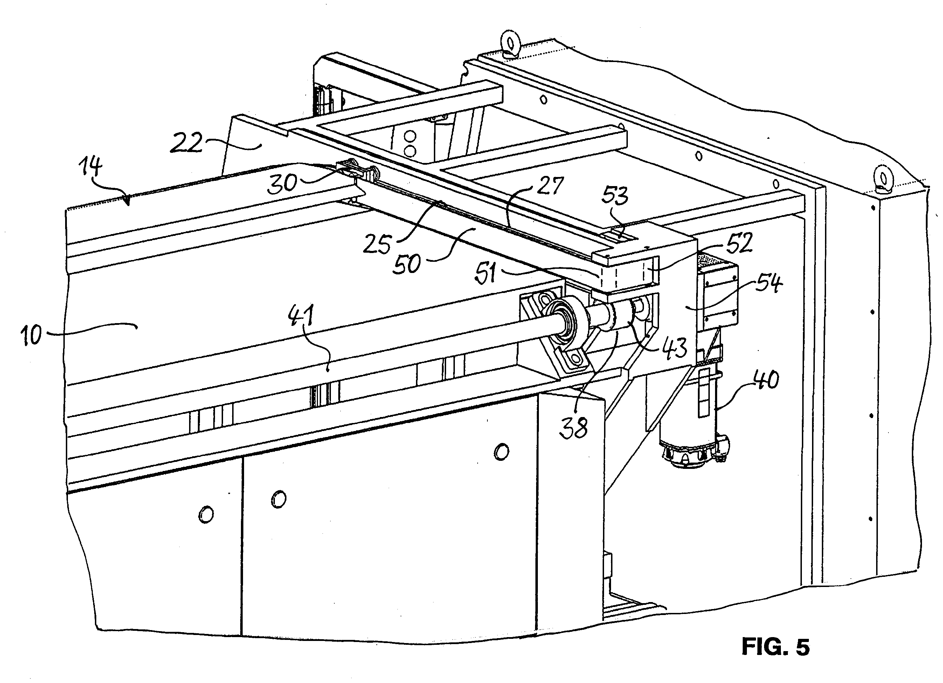

Figur 5 zeigt einen Ausschnitt der Rückansicht des Schutzgehäuses 1, bei dem die Oberseite des Mittelabschnitts 2 mit der Dachplatte 10 verschlossen ist und das Schutzelement 14 sich in der Schließstellung befindet. Die Ansicht zeigt außerdem die Anordnung eines Schutzbandes 50, das den gradlinigen Schienenabschnitt 27 der Führungsschiene 25 abdeckt und schützt.

Das Schutzband 50 ist mit einem Ende an dem hintersten Führungselement 30 befestigt und erstreckt sich von dort zu zwei parallelen Führungsrollen 51, 52, um die es herum auf die andere Seite der Seitenwand 22 geführt ist, wo das andere Ende des Schutzbandes 50 an einem Gleitschuh 53 befestigt ist. Die Führungsrollen 51, 52 sind an einem Träger 54 gehalten, der an dem hinteren Ende der Seitenwand 22 angeordnet ist und der auch den Antriebsmotor 40 hält. Der Gleitschuh 53 gleitet auf einer Gleitschiene, die parallel zum geraden Schienenabschnitt 27 der Führungsschiene 25 auf der Rückseite der Seitenwand 22 verläuft. Von dem Gleitschuh 53 führt außerdem ein Arm durch eine Öffnung in der Seitenwand 22 hindurch zu dem Zugmittelgetriebe 38. Das Ende des Arms ist in der in Figur 5 gezeigten Stellung des Zugmittelgetriebes 38 in der Nähe des Treibrades 43 an dem unteren Gurt des Zugmittels befestigt. Das Führungselement 30 und der Gleitschuh 53 sind somit über das Zugmittelgetriebe 38 miteinander verbunden und ihre Lage an der Seitenwand 22 wird durch das Zugmittelgetriebe 38 bestimmt.

Wird zum Öffnen des Schutzelements 14 das Führungselement 30 über den Obergurt des Zugmittelgetriebes 38 angetrieben und in Richtung des Träges 54 bewegt, so wird gleichzeitig der Gleitschuh 53 durch den Untergurt des Zugmittelgetriebes 38 mit der gleichen Geschwindigkeit in die entgegengesetzte Richtung bewegt, so dass das Schutzband 50 kontinuierlich über die Führungsrollen 51, 52 auf die andere Seite der Seitenwand 22 gezogen wird, auf der sich der Gleitschuh 53 befindet. Beim Schließen des Schutzelements 14 bewegen sich das Führungselement 30 und der Gleitschuhs 53 in umgekehrter Richtung, wobei das Schutzband 50 von dem Führungselement 30 wieder in die in Figur 5 gezeigte Stellung gezogen wird. Während beider Bewegungen bleibt das Schutzband 50 gespannt, wobei zusätzlich zur Aufrechterhaltung einer gewissen Vorspannung zwischen dem Führungselement 30 oder dem Gleitschuh 53 und dem entsprechenden Ende des Schutzbandes 50 ein vorgespanntes Federelement angeordnet sein kann. Auch das Schutzband selbst kann mit einer für dauerhaftes Spannen geeigneten Federwirkung versehen sein.

## Patentansprüche

1. Schutzgehäuse für eine Prüf-, Mess-, oder Fertigungseinrichtung mit einem Schutzelement (14), das von Führungseinrichtungen (23, 24) gehalten und geführt zwischen einer eine Gehäuseöffnung (16) verschließenden Schließstellung und einer die Gehäuseöffnung (16) öffnenden Offenstellung hin und her bewegbar ist, wobei die Führungseinrichtungen (23, 24) an einander gegenüber liegenden, an die Gehäuseöffnung (16) angrenzenden Seitenwänden (21, 22) angeordnet sind, an einer Frontseite des Schutzgehäuses (1) nach außen gewölbte, bogenförmige Abschnitte haben und an einer Oberseite des Schutzgehäuses (1) geradlinig nach hinten verlaufend ausgebildet sind, wobei das Schutzelement (14) wenigstens zwei biegesteife, rechteckige Platten (18, 19) umfasst, die gerade Längsseiten haben und die jeweils an einer Längsseite beweglich miteinander verbunden sind, wobei jede der Führungseinrichtungen (23, 24) eine an der Seitenwand (21, 22) befestigte Führungsschiene (25) und mehrere an dieser geführte Führungselemente (30, 31, 32) aufweist, die an dem Schutzelement (14) drehbar gelagert und in einem Abstand voneinander angeordnet sind, **dadurch gekennzeichnet, dass** das Schutzelement (14) mittels einer Antriebsvorrichtung (37) bewegbar ist, die zwei synchron antreibbare Zugmittelgetriebe (38, 39) aufweist, die jeweils auf der Innenseite des Schutzgehäuses (1) nahe einer der Führungseinrichtungen (23, 24) angeordnet sind und ein parallel zum geradlinigen Abschnitt der jeweiligen Führungseinrichtung (23, 24) verlaufendes Zugmittel (45) umfassen, das mit einem Führungselement (30) treibend verbunden ist und dass die beiden Zugmittelgetriebe (38, 39) mit einer gemeinsamen Antriebswelle (41) gekuppelt sind, die parallel zu einer Längsseite des Schutzelements (14) verläuft.

2. Schutzgehäuse nach dem vorhergehenden Anspruch, **dadurch gekennzeichnet, dass** wenigstens eine der Platten (18, 19) eine den bogenförmigen Abschnitten der Führungseinrichtungen (23, 24) angeglichene Krümmung haben.

3. Schutzgehäuse nach einem der vorhergehenden Ansprüche, **dadurch gekennzeichnet, dass** die Platten (18, 19) jeweils an einer Längsseite durch ein Scharnier (20) verbunden sind.

4. Schutzgehäuse nach Anspruch 3, **dadurch gekennzeichnet, dass** ein Führungselement (31) an dem Scharnier (20) und jeweils ein weiteres Führungselement (30, 32) auf beiden Seiten des Scharniers (20) und in einem Abstand von diesem angeordnet ist.

5. Schutzgehäuse nach einem der vorhergehenden Ansprüche, **dadurch gekennzeichnet, dass** es an der Oberseite mittels einer feststehenden Dachplatte (10) verschlossen ist, die sich von einem hinteren Rand der Gehäuseöffnung (16) bis zu einer Rückwand (47) des Schutzgehäuses (1) erstreckt.

6. Schutzgehäuse nach Anspruch 5, **dadurch gekennzeichnet, dass** die Dachplatte (10) zwischen den beiden Zugmittelgetrieben (38, 39) angeordnet ist und dass das Schutzelement (14) in der Offenstellung über der Dachplatte (10) angeordnet ist.

7. Schutzgehäuse nach einem der vorhergehenden Ansprüche, **dadurch gekennzeichnet, dass** an der Frontseite des Schutzgehäuses (1) eine feststehende Schutzwand (8) angeordnet ist, die sich vom unteren Rand der Gehäuseöffnung (16) bis in Bodennähe erstreckt.

8. Schutzgehäuse nach Anspruch 7, **dadurch gekennzeichnet, dass** die Schutzwand (8) mit einem langgestreckten Schlitz (11) zum Hindurchführen von Bedienungselementen (12, 13) versehen ist.

9. Schutzgehäuse für eine Prüf-, Mess-, oder Fertigungseinrichtung mit einem Schutzelement (14), das von Führungseinrichtungen (23, 24) gehalten und geführt zwischen einer eine Gehäuseöffnung (16) verschließenden Schließstellung und einer die Gehäuseöffnung (16) öffnenden Offenstellung hin und her bewegbar ist, wobei die Führungseinrichtungen (23, 24) an einander gegenüber liegenden, an die Gehäuseöffnung (16) angrenzenden Seitenwänden (21, 22) angeordnet sind, an einer Frontseite des Schutzgehäuses (1) nach außen gewölbte, bogenförmige Abschnitte haben und an einer Oberseite des Schutzgehäuses (1) geradlinig nach hinten verlaufend ausgebildet sind, wobei das Schutzelement (14) wenigstens zwei biegesteife, rechteckige Platten (18, 19) umfasst, die gerade Längsseiten haben und die jeweils an einer Längsseite beweglich miteinander verbunden sind, wobei jede der Führungseinrichtungen (23, 24) eine an der Seitenwand (21, 22) befestigte Führungsschiene (25) und mehrere an dieser geführte Führungselemente (30, 31, 32) aufweist, die an dem Schutzelement (14) drehbar gelagert und in einem Abstand voneinander angeordnet sind, **dadurch gekennzeichnet, dass** das Schutzelement (14) mittels einer Antriebsvorrichtung (37) bewegbar ist, die zwei synchron antreibbare Zugmittelgetriebe (38, 39) aufweist, die jeweils auf der Innenseite des Schutzgehäuses (1) nahe einer der Führungseinrichtungen (23, 24) angeordnet sind und ein parallel zum geradlinigen Abschnitt der jeweiligen Führungseinrichtung (23, 24) verlaufendes Zugmittel (45) umfassen, das mit einem Führungselement (30) treibend verbunden ist und dass jedes der beiden Zugmittelgetriebe (38, 39) durch einen separaten Elektromotor antreibbar ist, wobei die Elektromotore gemeinsam an eine elektrische Steuereinrichtung angeschlossen sind, die die Drehbewegungen der Elektromotore synchronisiert.

10. Schutzgehäuse nach einem der vorhergehenden Ansprüche, **dadurch gekennzeichnet, dass** eines der Zugmittelgetriebe (38) mit einem Antriebsmotor (40) gekuppelt ist, der auf einer der Führungseinrichtung (23) abgekehrten Seite einer Seitenwand (22) innerhalb des Schutzgehäuses (1) angeordnet ist.

11. Schutzgehäuse nach einem der vorhergehenden Ansprüche, **dadurch gekennzeichnet, dass** jedes Führungselement (30, 31, 32) in einem Abstand voneinander angeordnete und um parallele Achsen drehbare Rollen (34) aufweist, zwischen denen die Führungsschiene (25) angeordnet ist.

12. Schutzgehäuse nach einem der vorhergehenden Ansprüche, **dadurch gekennzeichnet, dass** jedes Führungselement (30, 31, 32) ein Drehlager aufweist, an dem das Schutzelement (14) befestigt ist.

13. Schutzgehäuse nach einem der vorhergehenden Ansprüche, **dadurch gekennzeichnet, dass** die Führungsschiene (25) auf entgegengesetzten Seiten Längsrillen aufweist, in die die Rollen (34) eingreifen.

14. Schutzgehäuse nach einem der vorhergehenden Ansprüche, **dadurch gekennzeichnet, dass** an dem hintersten Führungselement (30) ein Ende eines flexiblen Schutzbands (50) befestigt ist, das bei geschlossenem Schutzelement (14) den geradlinigen Abschnitt der Führungseinrichtung bedeckt.

15. Schutzgehäuse nach dem vorhergehenden Anspruch, **dadurch gekennzeichnet, dass** das Schutzband (50) über Führungsrollen (51, 52) um ein hinteres Ende der Seitenwand (22) herum geführt und mit dem anderen Ende an einem Gleitschuh (53) befestigt ist, der an einer auf der der Führungseinrichtung (23) abgekehrten Seite der Seitenwand (22) angeordneten Gleitschiene geführt ist und treibend mit dem Zugmittel (45) des an der Seitenwand (22) angeordneten Zugmittelgetriebes (38) verbunden ist.

## Claims

1. A protective housing for a testing, measuring or manufacturing device, with a guard member (14) which, held and guided by guide devices (23, 24), is movable in a reciprocating motion between a closed position closing a housing opening (16) and an open position opening the housing opening (16), wherein the guide devices (23, 24) are arranged on oppositely facing end walls (21, 22) adjoining the housing opening (16), have on one front of the protective housing (1) outwardly curved, arc-shaped sections and on one upper side of the protective housing (1) are constructed in a rearwardly extending, straight-line configuration, wherein the guard member (14) comprises at least two flexurally stiff rectangular panels (18, 19) having straight long sides and being movably connected to each other on one long side each, wherein each of the guide devices (23, 24) includes a guide rail (25) secured to the end wall (21, 22) and a plurality of guide elements (30, 31, 32) guided thereon which are rotatably mounted on the guard member (14) and arranged in a spaced relationship to one another, **characterized in that**, the guard member (14) is moveable with a drive device (37), that includes two flexible drive mechanisms (38, 39) adapted to be driven in synchronized fashion, each being arranged on the inside of the protective housing (1) close to one of the guide devices (23, 24) and comprising a transmission means (45) which extends parallel to the straight-line section of the respective guide device (23, 24) and is connected to a guide element (30) in a driving relationship thereto, and that the two flexible drive mechanisms (38, 39) are coupled to a common drive shaft (41) extending parallel to one long side of the guard member (14).

2. The protective housing according to the preceding claim, **characterized in that** at least one of the panels (18, 19) has a curvature shaped to conform to the arc-shaped sections of the guide devices (23, 24).

3. The protective housing according to any one of the preceding claims, **characterized in that** the panels (18, 19) are connected to one other on one long side by a respective hinge (20).

4. The protective housing according to claim 3, **characterized in that** one guide element (31) is arranged on the hinge (20) and one further guide element (30, 32) each is arranged on either side of the hinge (20) and in a spaced relationship thereto.

5. The protective housing according to any one of the preceding claims, **characterized in that** its upper side is closed by means of a fixed roof panel (10) extending from a rear edge of the housing opening (16) to a rear wall (47) of the protective housing (1).

6. The protective housing according to claim 5, **characterized in that** the roof panel (10) is arranged between the two flexible drive mechanisms (38, 39), and the guard member (14) is located above the roof panel (10) in the open position.

7. The protective housing according to any one of the preceding claims, **characterized in that** the front side of the protective housing (1) is equipped with a fixed guard wall (8) which extends from the lower edge of the housing opening (16) to the proximity of the bottom.

8. The protective housing according to claim 7, **characterized in that** the guard wall (8) is provided with an elongated slot (11) for the passage of control elements (12, 13).

9. A protective housing for a testing, measuring or manufacturing device, with a guard member (14) which, held and guided by guide devices (23, 24), is movable in a reciprocating motion between a closed position closing a housing opening (16) and an open position opening the housing opening (16), wherein the guide devices (23, 24) are arranged on oppositely facing end walls (21, 22) adjoining the housing opening (16), have on one front of the protective housing (1) outwardly curved, arc-shaped sections and on one upper side of the protective housing (1) are constructed in a rearwardly extending, straight-line configuration, wherein the guard member (14) comprises at least two flexurally stiff rectangular panels (18, 19) having straight long sides and being movably connected to each other on one long side each, wherein each of the guide devices (23, 24) includes a guide rail (25) secured to the end wall (21, 22) and a plurality of guide elements (30, 31, 32) guided thereon which are rotatably mounted on the guard member (14) and arranged in a spaced relationship to one another, **characterized in that**, the guard member (14) is moveable with a drive device (37), that includes two flexible drive mechanisms (38, 39) adapted to be driven in synchronized fashion, each being arranged on the inside of the protective housing (1) close to one of the guide devices (23, 24) and comprising a transmission means (45) which extends parallel to the straight-line section of the respective guide device (23, 24) and is connected to a guide element (30) in a driving relationship thereto and that each of the two flexible drive mechanisms (38, 39) is drivable by a separate electric motor, with the electric motors being jointly connected to an electric control device synchronizing the rotary motions of the electric motors.

10. The protective housing according to any one of the preceding claims, **characterized in that** the flexible drive mechanism (38) is coupled to a drive motor (40) arranged within the protective housing (1) on a side of an end wall (22) facing away from the guide device (23).

11. The protective housing according to any one of the preceding claims, **characterized in that** each guide element (30, 31, 32) includes spaced rollers (34) which are rotatable about parallel axes and have the guide rail (25) arranged therebetween.

12. The protective housing according to any one of the preceding claims, **characterized in that** each of the guide elements (30, 31, 32) includes a journal bearing to which the guard member (14) is attached.

13. The protective housing according to any one of the preceding claims, **characterized in that** the guide rail (25) includes longitudinal grooves on opposed sides into which the rollers (34) engage.

14. The protective housing according to any one of the preceding claims, **characterized in that** one end of a flexible protective strip (50) is attached to the rearmost guide element (30), which with the guard member (14) in closed position covers the straight-line portion of the guide device.

15. The protective housing according to the preceding claim, **characterized in that** the protective strip (50) is routed around a rear end of the end wall (22) via guide rollers (51, 52) while its other end is secured to a slide block (53) which is guided on a slide rail arranged on the side of the end wall (22) facing away from the guide device (23) and is drivingly connected to the transmission means (45) of the flexible drive mechanism (38) arranged on the end wall (22).

## Revendications

1. Boîtier de protection pour un dispositif de contrôle, de mesure ou de fabrication comprenant un élément de protection (14) qui peut être déplacé d'avant en arrière en étant maintenu et guidé par des dispositifs de guidage (23, 24) entre une position fermée fermant une ouverture de boîtier (16) et une position ouverte ouvrant l'ouverture de boîtier (16), les dispositifs de guidage (23, 24) étant disposés sur des parois latérales (21, 22) opposées l'une à l'autre et adjacente à l'ouverture de boîtier (16), présentant, sur une face frontale du boîtier de protection (1), des parties arquées et cintrées vers l'extérieur, et étant formés sur une face supérieure du boîtier de protection (1) de manière à s'étendre en ligne droite vers l'arrière, l'élément de protection (14) comprenant au moins deux plaques rectangulaires rigides (18, 19) qui présentent des côtés longitudinaux droits et qui sont reliées entre elles sur un côté longitudinal de manière mobile, chacun des dispositifs de guidage (23, 24) comportant un rail de guidage (25) fixé à la paroi latérale (21, 22) et plusieurs éléments de guidage (30, 31, 32) guidés sur celui-ci, lesquels éléments de guidage sont logés rotatifs sur l'élément de protection (14) et sont disposés à distance les uns des autres, **caractérisé en ce que** l'élément de protection (14) peut être déplacé au moyen d'un dispositif d'entraînement (37) qui comporte deux transmissions par traction (38, 39) à entraînement synchronisé qui sont disposées chacune à l'intérieur du boîtier de protection (1) à proximité de l'un des dispositifs de guidage (23, 24) et qui comprennent un moyen de traction (45) qui s'étend parallèlement à la section rectiligne du dispositif de guidage (23, 24) correspondant et qui est relié en entraînement à un élément de guidage (30), et **en ce que** les deux transmissions par traction (38, 39) sont reliées à un arbre moteur commun (41) qui s'étend parallèlement à un côté longitudinal de l'élément de protection (14).

2. Boîtier de protection selon la revendication précédente, **caractérisé en ce qu'**au moins une des plaques (18, 19) présente une courbure adaptée aux parties arquées des moyens de guidage (23, 24).

3. Boîtier de protection selon l'une des revendications précédentes, **caractérisé en ce que** les plaques (18, 19) sont reliées chacune sur un côté longitudinal par une charnière (20).

4. Boîtier de protection selon la revendication 3, **caractérisé en ce qu'**un élément de guidage (31) est disposé sur la charnière (20) et un autre élément de guidage (30, 32) est disposé de chaque côté de la charnière (20) et à distance de celle-ci.

5. Boîtier de protection selon l'une des revendications précédentes, **caractérisé en ce qu'**il est fermé sur la face supérieure au moyen d'une plaque de toit fixe (10) qui s'étend d'un bord arrière de l'ouverture de boîtier (16) jusqu'à une paroi arrière (47) du boîtier de protection (1).

6. Boîtier de protection selon la revendication 5, **caractérisé en ce que** la plaque de toit (10) est disposée entre les deux transmissions par traction (38, 39) et **en ce que** l'élément de protection (14) est disposé au-dessus de la plaque de toit (10) en position ouverte.

7. Boîtier de protection selon l'une des revendications précédentes, **caractérisé en ce qu'**une paroi de protection fixe (8) est disposée sur la face frontale du boîtier de protection (1), laquelle paroi de protection s'étend du bord inférieur de l'ouverture de boîtier (16) jusqu'à proximité du sol.

8. Boîtier de protection selon la revendication 7, **caractérisé en ce que** la paroi de protection (8) est munie d'une fente allongée (11) pour le passage d'éléments de commande (12, 13).

9. Boîtier de protection pour un dispositif de contrôle, de mesure ou de fabrication comprenant un élément de protection (14) qui peut être déplacé d'avant en arrière en étant maintenu et guidé par des dispositifs de guidage (23, 24) entre une position fermée fermant une ouverture de boîtier (16) et une position ouverte ouvrant l'ouverture de boîtier (16), les dispositifs de guidage (23, 24) étant disposés sur des parois latérales (21, 22) opposées l'une à l'autre et adjacentes à l'ouverture du boîtier (16), présentant, sur une face frontale du boîtier de protection (1), des parties arquées et cintrées vers l'extérieur, et étant formées sur une face supérieure du boîtier de protection (1) de manière à s'étendre en ligne droite vers l'arrière, l'élément de protection (14) comprenant au moins deux plaques rectangulaires rigides (18, 19) qui présentent des côtés longitudinaux droits et qui sont reliées entre elles sur un côté longitudinal de manière mobile, chacun des dispositifs de guidage (23, 24) comportant un rail de guidage (25) fixé à la paroi latérale (21, 22) et plusieurs éléments de guidage (30, 31, 32) guidés sur celui-ci, lesquels éléments de guidage sont logés rotatifs sur l'élément de protection (14) et sont disposés à distance les uns des autres, **caractérisé en ce que** l'élément de protection (14) peut être déplacé au moyen d'un dispositif d'entraînement (37) qui comporte deux transmissions par traction (38, 39) à entraînement synchronisé qui sont disposées chacune à l'intérieur du boîtier de protection (1) à proximité de l'un des dispositifs de guidage (23, 24) et qui comprennent un moyen de traction (45) qui s'étend parallèlement à la section rectiligne du dispositif de guidage (23, 24) correspondant et qui est relié en entraînement à un élément de guidage (30), et **en ce que** chacune des deux transmissions par traction (38, 39) peut être entraînée par un moteur électrique séparé, les moteurs électriques étant reliés ensemble à un dispositif de commande électrique qui synchronise les déplacements en rotation des moteurs électriques.

10. Boîtier de protection selon l'une des revendications précédentes, **caractérisé en ce que** l'une des transmissions par traction (38) est couplée à un moteur d'entraînement (40) disposé dans le boîtier de protection (1) sur un côté d'une paroi latérale (22) opposé au dispositif de guidage (23).

11. Boîtier de protection selon l'une des revendications précédentes, **caractérisé en ce que** chaque élément de guidage (30, 31, 32) est muni de galets (34) espacés les uns des autres et pouvant tourner autour d'axes parallèles, le rail de guidage (25) étant disposé entre ceux-ci.

12. Boîtier de protection selon l'une des revendications précédentes, **caractérisé en ce que** chaque élément de guidage (30, 31, 32) est muni d'un palier pivot sur lequel est fixé l'élément de protection (14).

13. Boîtier de protection selon l'une des revendications précédentes, **caractérisé en ce que** le rail de guidage (25) est muni de rainures longitudinales sur des côtés opposés dans lesquelles s'engagent les rouleaux (34).

14. Boîtier de protection selon l'une des revendications précédentes, **caractérisé en ce qu'**une extrémité d'une bande de protection flexible (50) est fixée à l'élément de guidage (30) le plus en arrière, laquelle bande recouvre la section rectiligne du dispositif de guidage lorsque l'élément de protection (14) est fermé.

15. Boîtier de protection selon la revendication précédente, **caractérisé en ce que** la bande de protection (50) est guidée par l'intermédiaire de rouleaux de guidage (51, 52) autour d'une extrémité arrière de la paroi latérale (22) et est fixée par l'autre extrémité à un patin de glissement (53) qui est guidé sur un rail de glissement disposé sur le côté de la paroi latérale (22) opposé au dispositif de guidage (23) et qui est relié en entraînement au moyen de traction (45) de la transmission par traction (38) disposée sur la paroi latérale (22).
